Europäisches Patentamt

European Patent Office

Office européen des brevets

(19)

(11) **EP 0 818 839 A2**

(12) **EUROPEAN PATENT APPLICATION**

(43) Date of publication:
14.01.1998 Bulletin 1998/03

(51) Int. Cl.⁶: **H01M 4/02**, H01M 4/60

(21) Application number: 97109483.4

(22) Date of filing: 11.06.1997

(84) Designated Contracting States:
AT BE CH DE DK ES FI FR GB GR IE IT LI LU MC NL PT SE

(30) Priority: 10.07.1996 JP 180593/96

(71) Applicant:
MATSUSHITA ELECTRIC INDUSTRIAL CO., LTD.
Kadoma-shi, Osaka 571 (JP)

(72) Inventor: Sotomura, Tadashi
Kashiwara City, 582 (JP)

(74) Representative:
Dr. Elisabeth Jung
Dr. Jürgen Schirdewahn
Dipl.-Ing. Claus Gernhardt
Postfach 40 14 68
80714 München (DE)

(54) **Composite electrode containing an organic disulfide compound and method for producing the same**

(57) Disclosed is a composite polymer electrode of a conductive polymer and an organic disulfide compound imparted with improved cycle life against repeated oxidation-reduction. The composite electrode comprises an organic disulfide compound, polyaniline and polyvinylidene fluoride. The composite electrode may further contain a metal oxide.

FIG. 1

EP 0 818 839 A2

**Description**

BACKGROUND OF THE INVENTION

The present invention relates to a composite electrode composed of a plurality of organic compounds or a combination of an organic compound and an inorganic compound, which is applied for various electrochemical devices such as batteries, electrochromic display devices, sensors, memories and the like, and a method for producing such composite electrodes.

Since the discovery of conductive polyacetylene by Shirakawa in 1971, vigorous studies have been made on conductive polymer electrodes, because lightweight batteries having a higher energy density, electrochromic display devices having a large area, or electrochemical devices such as biochemical sensors using a microelectrode may be realized by the use of such conductive polymers as electrode materials. Moreover, U.S. Patent No. 4,833,048 proposes an organic disulfide compound as an organic material from which high energy density can be expected. A composite polymer electrode of a combination of a conductive polymer and an organic disulfide compound was already proposed by the present inventor et al. in J. Electrochim. Acta, an electrochemical journal published in England (Vol. 37: 1852, 1992). The composite polymer electrode is characterized by high voltage, which is a characteristic feature of conventional conductive polymer electrodes, and high energy density, which is a characteristic feature of organic disulfide compounds.

A combination of the composite polymer electrode and a lithium negative electrode is expected to yield a potent lithium secondary battery having a voltage of 3 V or more and an energy density of 150 Wh/kg or more, equivalent to or overwhelming those of conventional secondary batteries.

However, conventional composite polymer electrodes have a drawback such that repeated oxidation-reduction (charging and discharging) causes gradual decreases in the capacity of the electrode. An electrically insulating polydisulfide compound with poor ionic conductivity, which is a product of polymerization of an organic disulfide compound by oxidation (charging) is poor in solubility in an electrolyte. On the other hand, an organic disulfide monomer, which is a product of monomerization of a polydisulfide compound by reduction (discharging) is high in solubility in an electrolyte. Therefore, repeated oxidation-reduction causes dissolution of a part of such disulfide monomer into an electrolyte, and the dissolved monomer is polymerized again at a site different from the position of the conductive polymer which is present in the electrode originally. The electrically insulating polydisulfide compound, which is deposited as a result of polymerization of the dissolved monomer apart from the site of the conductive polymer, is isolated from the electron/ion conductive network inside the polymer electrode, and plays no role in electrode reaction. This is the reason why repeated oxidation-reduction results in gradual decreases of the electrode capacity.

BRIEF SUMMARY OF THE INVENTION

The object of the present invention is to provide a composite polymer electrode which will solve the above-mentioned problem and in which the decrease in capacity by repeated oxidation-reduction is minimized, without losing the characteristic features of high voltage and high energy density, which are the characteristics inherent to the composite polymer electrode of a combination of a conductive polymer and an organic disulfide compound.

Another object of the present invention is to provide a method for producing such composite polymer electrodes.

The present invention is directed to a composite electrode comprising an organic disulfide compound which contains at least one sulfur-sulfur bond, wherein the sulfur-sulfur bond is cleaved when electrically reduced to form a sulfur-metal ion bond and the sulfur-metal ion bond is regenerated into the sulfur-sulfur bond when electrically oxidized, the metal ion including proton (hereinafter referred to as "organic disulfide compound"), polyaniline, and polyvinylidene fluoride.

The present invention also provides a composite electrode comprising an organic disulfide compound, polyaniline, a metal oxide, and polyvinylidene fluoride.

Addition of the polyvinylidene fluoride effectively reduces dissolution and escape of the organic disulfide compound, polyaniline, or a complex of these two into the electrolyte during oxidation-reduction (charging and discharging) of the composite polymer electrode, thereby imparting excellent characteristics against repeated oxidation-reduction (charging-discharging) to the electrode.

The present invention can give a composite electrode characterized by excellent performance against repeated oxidation-reduction (charging-discharging). Application of the composite electrode as the positive electrode of a lithium secondary battery realizes a battery having a long charge-discharge cycle life.

Other than batteries, employment of the composite electrode of the present invention for the counter electrode also realizes an electrochromic display device having a long coloring and decoloring life and an electrochemical analogue memory having a long life against repeated read and write operations.

While the novel features of the invention are set forth particularly in the appended claims, the invention, both as to organization and content, will be better understood and appreciated, along with other objects and features thereof, from the following detailed description taken in conjunction with the drawings.

BRIEF DESCRIPTION OF THE SEVERAL VIEWS OF THE DRAWING

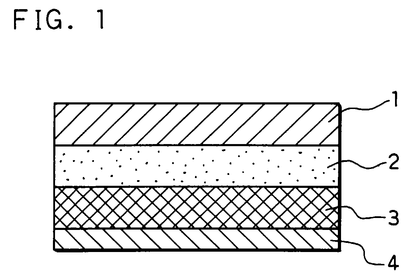

FIG. 1 is a rough longitudinal cross-sectional view of a lithium secondary battery element for evaluating composite electrodes of the embodiments in accordance with the present invention.

DETAILED DESCRIPTION OF THE INVENTION

In a preferred mode of the present invention, the composite electrode comprises an organic disulfide compound, polyaniline, and polyvinylidene fluoride.

In another preferred mode of the present invention, the composite electrode comprises an organic disulfide compound, polyaniline, polyvinylidene fluoride, and a metal oxide.

The presence of polyvinylidene fluoride imparts adequate flexibility to the composite electrode, thereby realizing a thin film secondary battery or other thin film electrochemical devices. The polyvinylidene fluoride also functions to minimize dissolution and migration of the organic disulfide compound, polyaniline, or a complex of these two into the electrolyte during oxidation-reduction (charging and discharging), thereby imparting excellent characteristics against repeated oxidation-reduction (charging-discharging) to the electrode. Furthermore, the presence of this substance helps to alleviate relaxation of the composite electrode due to a change in volume caused by oxidation-reduction reaction of the metal oxide and minimizes deterioration of the characteristics of the electrode induced by repeated oxidation-reduction reaction markedly.

Particularly, polyvinylidene fluoride, which is a copolymer of a kind of polyvinylidene fluoride, vinylidene difluoride and propylene hexafluoride can absorb a large amount of an organic electrolyte which comprises a lithium salt, such as $LiBF_4$, $LiClO_4$, $LiPF_6$, or the like, and a non-protonic organic solvent therefor, such as ethylene carbonate, propylene carbonate, diethyl carbonate, dimethyl carbonate, or the like. The polyvinylidene fluoride is advantageous in that if a composite electrode containing the polyvinylidene fluoride is applied to an electrochemical device such as battery, an organic electrolyte included in the electrolyte layer is absorbed by this substance, which helps the development of an ion conduction pathway inside the composite electrode, thereby enabling oxidation-reduction reaction at a large current.

Furthermore, the method for producing composite electrodes in accordance with the present invention uses N-R-2-pyrrolidone where R represents hydrogen atom or an alkyl group, such as $CH_3$, $C_2H_5$, $n-C_4-H_9$, and the like, which serves as a good solvent for all of the polyaniline, organic disulfide compound and polyvinylidene fluoride, so that these components can be mixed homogeneously at molecular level. Therefore, the method for producing composite electrodes in accordance with the present invention is effective for obtaining a thin film or a large area composite electrode of homogeneous composition with ease. A commercially available reagent can be used as the N-R-2-pyrrolidone.

The method for producing composite electrodes in accordance with the present invention comprises the steps of dissolving an organic disulfide compound and polyvinylidene fluoride in N-R-2-pyrrolidone to prepare a viscous solution, adding and dissolving a polyaniline powder to and in the viscous solution thus prepared to prepare a solution "A", and applying the resultant solution "A" onto a conductive substrate of, for example, a silver plated copper foil, followed by heating it in a vacuum or in an inert gas atmosphere to remove the existing N-R-2-pyrrolidone partially or entirely. Since the polyaniline is not easily dissolved in a solvent lacking an organic disulfide compound, it is preferable to dissolve the organic disulfide compound in the N-R-2-pyrrolidone beforehand prior to addition of the polyaniline in the above-mentioned steps.

In another preferred mode of the method for producing composite electrodes in accordance with the present invention, the polyaniline is molded into a film beforehand, to which a viscous N-R-2-pyrrolidone solution dissolving the organic disulfide compound and the polyvinylidene fluoride is applied, and then the resultant is heated at 60 to 100°C in a vacuum or in an inert gas atmosphere, thereby to produce a composite film of which one surface is rich in polyaniline and other surface is rich in organic disulfide compound. The polyaniline film can be produced by depositing polyaniline on a substrate by electrolytic polymerization. Another method for producing a polyaniline film comprises the steps of dissolving polyaniline synthesized by electrolytic polymerization or chemical polymerization in N-R-2-pyrrolidone and applying the resultant solution onto a substrate, followed by heating it in a vacuum or in an inert gas atmosphere to remove the existing N-R-2-pyrrolidone partially or entirely.

In still another preferred mode of the method for producing composite electrodes in accordance with the present invention, a viscous solution "B" is obtained by the steps of 1) dissolving an organic disulfide compound in N-R-2-pyrrolidone, and 2) dissolving a polyaniline powder in the resultant solution, which is further heated to dissolve, or diluted with N-R-2-pyrrolidone, if necessary. This is because, as discussed above, polyaniline is not easy to dissolve in a solvent lacking an organic disulfide compound. Because it is difficult to dissolve polyvinylidene fluoride or mix a metal oxide directly in or directly with the viscous solution "B", a dispersed mixture "C" is prepared primarily, in which a metal oxide powder is dispersed in N-R-2-pyrrolidone dissolving polyvinylidene fluoride. Then, the viscous solution "B" is mixed with the dispersed mixture "C" homogeneously using a homogenizer, thereby to obtain a dispersed mixture "D". The resultant dispersed mixture "D" is applied onto a conductive substrate of, for example, a silver plated copper foil, which is then heated in a vacuum or in an inert gas atmosphere to remove the existing N-R-2-pyrrolidone partially or entirely.

In the present invention, a homopolymer prepared by polymerizing vinylidene difluoride alone and a copolymer of vinylidene difluoride and a vinyl fluoride monomer such as ethylene tetrafluoride or propylene hexafluoride can be used as the polyvinylidene fluoride. Polyvinylidene fluorides having a mean molecular weight of 100,000 to 500,000 are preferable. The polyvinylidene fluoride is exemplified as "KUREMA KF polymer", manufactured by Kureha Chemical Industry Co., Ltd. "KF #1100" and "KF2300", manufactured by Kureha Chemical Industry Co., Ltd., can be used as the homopolymer and the copolymer of vinylidene difluoride and propylene hexafluoride, respectively.

As the organic disulfide compound, the compound described in U.S. Patent No. 4,833,048, represented by the general formula $R(S)_y)_n$ where R represents an aliphatic group or an aromatic group, and S represents sulfur, and where y is an integer of 1 or larger and n is an integer of 2 or larger, can be used. Commercially available dithioglycol represented by $HSCH_2CH_2SH$, 2,5-dimercapto-1,3,4-thiadiazole represented by $C_2N_2S(SH)_2$, s-triazine-2,4-6-trithiol represented by $C_3H_3N_3S_3$, 7-methyl-2,6,8-trimercaptopurine represented by $C_6H_6N_4S_3$, and 4,5-diamino-2,6-dimercaptopyrimidine represented by $C_4H_6N_4S_2$ can also be used without applying any treatment.

As the polyaniline, polymerized aniline by electrolytic or chemical oxidation is used. Reduced polyaniline in dedoped state is preferable from the point of solubility. An example of such polyaniline is "ANILEAD", manufactured by Nitto Denko Corporation. The reduction degree index (RDI) of polyaniline is expressed by electron absorption spectrum of a solution containing a small amount of polyaniline dissolved in N-methyl-2-pyrrolidone. This means that $RDI = I_{640}/I_{340}$, which represents the ratio of the peak intensity $I_{640}$ expressed at a long wavelength around 640 nm, derived from the quinonediimine structure, to the peak intensity $I_{340}$ expressed at a short wavelength around 340 nm, derived from the para substituted benzene structure. Polyaniline having an RDI of 0.5 or less is used preferably. The degree of dedoping of polyaniline is represented by the level of conductivity. Polyaniline having a conductivity of $10^{-5}$ S/cm or less is used preferably.

As the metal oxide, although any transition metal oxide or any composite oxide may be used, a compound having an electrochemical equivalent exceeding or equivalent to the electrochemical equivalent of polyaniline, that is, 150 mAh/g, is particularly preferred. Preferable transition metal oxides may be exemplified as $LiCoO_2$ (electrochemical equivalent: 140 to 160 mAh/g), $V_6O_{13}$ (160 to 230 mAh/g), $LiMn_2O_4$ (100 to 120 mAh/g), $V_2O_5$ (130 to 150 mAh/g), and $LiNiO_2$ (140 to 220 mAh/g). A metal oxide powder having a mean particle diameter around 1 to 10 $\mu$m may also be used. Any transition metal oxide containing plural transition metal elements may also be used without problem. For example, any composite oxide derived from $LiCoO_2$ in which a part of Co is substituted with Mn, Ni or Fe, or any composite oxide derived from $V_6O_{13}$ in which a part of V is substituted with W (tungsten) may also be used.

It is preferable that the amount of polyvinylidene fluoride is 0.1 to 10% by weight of the total amount of the organic disulfide compound, N-R-2-pyrrolidone and polyaniline, or the total amount of the organic disulfide compound, N-R-2-pyrrolidone, polyaniline and metal oxide. With respect to the proportion of the organic disulfide compound, N-R-2-pyrrolidone and polyaniline, it is preferable to contain the N-R-2-pyrrolidone and polyaniline in a range of 0.5 to 5 moles and 0.05 to 5 moles, respectively, per 1 mole of the organic disulfide compound. The metal oxide is contained preferably in a range of 0.5 to 5 parts by weight per 1 part of the polyaniline.

Protons may also be used as the metal ions for producing a salt by reduction of the organic disulfide compound, other than the alkali metal ions and alkaline earth metal ions as disclosed in the U.S. patent cited before. Particularly, in the case of alkali metal ions, it is possible to obtain a lithium secondary battery having a high energy density exceeding 200 Wh/kg at a voltage of about 3 V by using metal lithium or a lithium alloy such as lithium-aluminum alloy as an electrode which supplies and captures lithium ions and a lithium ion-conductive electrolyte in combination. Furthermore, if a hydride of a hydrogen storage alloy such as $LaNi_5$ is adopted as an electrode which supplies and captures protons, a battery having a voltage of 1 to 2 V can be obtained by using a proton-conductive electrolyte in combination.

The composite electrode of the present invention may further contain, if necessary, a conductive agent such as carbon, a shape forming agent or a reinforcement agent such as synthetic rubber, resin, ceramic powder, etc., in addition to the above-mentioned components.

A combination of the positive electrode using the composite electrode of the present invention, a nonaqueous electrolyte containing lithium ions, and a negative electrode which absorbs and desorbs lithium ions reversibly during charge and discharge can give a high energy density lithium secondary battery having exceptional cycle life characteristics against repeated charge and discharge operations. More specifically, as the negative electrode, metal lithium, lithium alloys such as lithium-aluminum, lithium-manganese, etc., materials capable of reversibly intercalating and deintercalating lithium ions such as carbon materials, metal sulfides, or conductive polymer materials may be used. The use of a copolymer of vinylidene difluoride and propylene hexafluoride as the polyvinylidene fluoride can realize a lithium secondary battery chargeable and dischargeable at a large current.

In the following, the present invention will be described more specifically by way of embodiments.

Example 1

A vinylidene difluoride-propylene hexafluoride copolymer (a KF polymer KF #2300, manufactured by Kureha Chemical Industry Co., Ltd.; melting point 151°C) was dissolved in N-methyl-2-pyrrolidone (hereinafter abbreviated to "NMP") at a concentration of 2% by weight. In 6 g of the resultant solution, 1.5 g (0.01 mole) of a monomer powder of 2,5-dimercapto-1,3,4-thiadiazole (hereinafter abbreviated to "DMcT") was dissolved as an organic disulfide compound, and a viscous transparent yellow NMP-KF polymer-DMcT solution was obtained.

Then, 1.0 g (0.0067 mole) of a powder of "ANILEAD" manufactured by Nitto Denko Corporation, was added in the dedoped and reduced state as the polyaniline to the NMP-KF polymer-DMcT solution, which gave another viscous dark green solution.

The resultant viscous solution was applied onto a silver plated copper foil (the thickness of the silver plated layer: 1 $\mu$m and the entire thickness of the foil: 17 $\mu$m) in a thickness of 90 $\mu$m, which was then heat treated under a reduced pressure of 1 mmHg at 80°C. This treatment caused an escape of 82% by weight of NMP. The content of the KF polymer in the resultant film was 3.3% by weight of the total amount of DMcT, polyaniline and NMP. The 15-$\mu$m-thick composite film thus obtained was cut into $2 \times 2$ cm sheets together with the copper foil, which gave a composite electrode "A". The composite electrode film of the composite electrode "A" weighed 9.0 mg.

Example 2

In a similar manner, another composite electrode "B" was obtained, with the exception of the use of a vinylidene difluoride homopolymer (a polymer KF #1100, manufactured by Kureha Chemical Industry Co., Ltd.; melting point 177°C) in place of KF #2300 used in Example 1. The composite electrode film of the composite electrode "B" had a thickness of 15 $\mu$m and weighed 8.9 mg.

Comparative Example 1

A viscous transparent yellow NMP-DMcT solution was obtained by dissolving 1.5 g (0.01 mole) of a DMcT monomer powder in 5 g of NMP.

The resultant solution was added with 1.0 g of polyaniline used in Example 1, and heated at 80°C in a sealed vessel of which air has been substituted with an inert gas, which gave a viscous greenish black solution.

The viscous solution thus prepared was applied onto a silver plated copper foil (the thickness of the silver plated layer: 1 $\mu$m and the entire thickness of the foil: 17 $\mu$m) in a thickness of 90 $\mu$m, which was then heat treated under a reduced pressure of 1 mmHg at 80°C. This treatment caused an escape of 68% by weight of NMP. The 15-$\mu$m-thick composite film thus obtained was cut into $2 \times 2$ cm sheets together with the copper foil, which gave a composite electrode "C". The composite electrode film of the composite electrode "C" weighed 8.6 mg.

Example 3

Another viscous transparent yellow NMP-DMcT solution was obtained by dissolving 1.5 g (0.01 mole) of a DMcT monomer powder in 5 g of NMP.

The resultant solution was added with 2.0 g (0.013 mole) of polyaniline used in Example 1, and heated at 80°C in a sealed vessel of which air has been substituted with an inert gas, which gave a viscous purple black solution.

Then, a powder of $V_6O_{13}$ having a mean particle diameter of 3 $\mu$m, which was prepared by hydrolysis of vanadium buthoxide followed by heating, was mixed with and dispersed in 10 g of an NMP solution dissolving KF #2300 used in Example 1 at a concentration of 2% by weight, which gave a slurry.

The slurry was added to the previously prepared viscous purple black solution and homogenized using a homogenizer at 5,000 rpm for about 10 minutes, and another viscous dispersed solution was obtained, which was then applied onto a 5-$\mu$m thick titanium foil in a thickness of 200 $\mu$m and heated at 80°C for about 120 minutes under a reduced pressure of 1 mmHg. In this way, a composite electrode film having a thickness of 25 $\mu$m was obtained. Heating under reduced pressure resulted in an escape of 86% by weight of NMP. The content of the KF polymer in the film thus obtained was 2.4% by weight of the total amount of DMcT, polyaniline, $V_6O_{13}$ and NMP. The composite film was cut into $2 \times 2$ cm sheets together with the titanium foil, which gave a composite electrode "D". The composite electrode film of the composite electrode "D" weighed 25 mg.

Example 4

Similarly, another composite electrode "E" was obtained, with the exception of the use of KF #1100 in Example 2 in place of KF #2300 in Example 3. The composite electrode film of the composite electrode "E" had a thickness of 25 $\mu$m and weighed 25 mg.

Comparative Example 2

A viscous transparent yellow NMP-DMcT solution was obtained by dissolving 1.5 g (0.01 mole) of a DMcT monomer powder in 5 g of NMP.

The resultant solution was added with 2.0 g of polyaniline used in Example 1, and heated at 80°C in a sealed vessel of which air has been substituted with an inert gas, which gave a viscous purple black solution.

Then, a slurry was prepared by dispersing 2.5 g of $V_6O_{13}$ powder similar to Example 3 in 10 g of NMP.

The slurry was added to the previously prepared viscous purple black solution and homogenized using a homogenizer at 5,000 rpm for about 10 minutes. In this way, a viscous dispersed solution was obtained, which was then applied onto a 5 $\mu$m-thick titanium foil in a thickness of 250 $\mu$m and heated under a reduced pressure of 1 mmHg at 80°C for about 120 minutes, which gave a composite electrode film having a thickness of 22 $\mu$m. Heating under reduced pressure caused an escape of 72% by weight of NMP. The composite electrode film thus obtained was cut into 2 $\times$ 2 cm sheets together with the titanium foil, which gave a composite electrode "F". The composite electrode film of the composite electrode "F" weighed 19 mg.

Example 5

Similarly, another composite electrode "G" was obtained using an $LiCoO_2$ powder having a mean particle diameter of 2 $\mu$m, which was prepared by heat treating a mixture of lithium carbonate and cobalt oxide ($Co_2O_3$), in place of the $V_6O_{13}$ powder in Example 3. The composite electrode film of the composite electrode "G" had a thickness of 26 $\mu$m and weighed 24 mg.

Example 6

In a similar manner, another composite electrode "H" was obtained, using an $LiCoO_2$ powder having a mean particle diameter of 2 $\mu$m, which was prepared by heat treating a mixture of lithium carbonate and cobalt oxide ($Co_2O_3$), in place of the $V_6O_{13}$ powder in Example 4. The composite electrode film of the composite electrode "H" had a thickness of 26 $\mu$m and weighed 24 mg.

Comparative Example 3

A composite electrode "I" was obtained in the same manner as in Comparative Example 2, with the exception of the use of an $LiCoO_2$ powder having a mean particle diameter of 2 $\mu$m, which was prepared by heat treating a mixture of lithium carbonate and cobalt oxide ($Co_2O_3$), in place of the $V_6O_{13}$ powder in Comparative Example 2. The composite electrode film of the composite electrode "I" had a thickness of 24 $\mu$m and weighed 22 mg.

Example 7

Similarly, a composite electrode "J" was obtained, using an $LiNiO_2$ powder having a mean particle diameter of 3 $\mu$m, which was prepared by heat treating a mixture of lithium hydroxide and nickel hydroxide, in place of the $V_6O_{13}$ powder in Example 3. The composite electrode film of the composite electrode "J" had a thickness of 26 $\mu$m and weighed 24 mg.

Example 8

Another composite electrode "K" was obtained, using an $LiNiO_2$ powder having a mean particle diameter of 3 $\mu$m, which was prepared by heat treating a mixture of lithium hydroxide and nickel hydroxide, in place of the $V_6O_{13}$ powder in Example 4. The composite electrode film of the composite electrode "K" had a thickness of 26 $\mu$m and weighed 24 mg.

Comparative Example 4

A composite electrode "L" was obtained in the same manner as in Comparative Example 2, with the exception of the use of an $LiNiO_2$ powder having a mean particle diameter of 3 $\mu$m, which was prepared by heat treating a mixture of lithium hydroxide and nickel hydroxide, in place of the $V_6O_{13}$ powder in Comparative Example 2. The composite electrode film of the composite electrode "L" had a thickness of 24 $\mu$m and weighed 22 mg.

Example 9

In the same manner as in Example 3, a composite electrode "M" was obtained, with the exception of the use of an $LiMn_2O_4$ powder having a mean particle diameter of 1 $\mu$m, which was prepared by heat treating a mixture of lithium carbonate and manganese oxide ($Mn_3O_4$), in place of the $V_6O_{13}$ powder in Example 3. The composite electrode film of the composite electrode "M" had a thickness of 23 $\mu$m and weighed 21 mg.

Example 10

Similarly, another composite electrode "N" was obtained, using an $LiMn_2O_4$ powder having a mean particle diameter of 1 $\mu$m, which was prepared by heat treating a mixture of lithium carbonate and manganese oxide ($Mn_3O_4$), in place of the $V_6O_{13}$ powder in Example 4. The composite electrode film of the composite electrode "N" had a thickness of 23 $\mu$m and weighed 21 mg.

Comparative Example 5

A composite electrode "O" was obtained in the same manner as in Comparative Example 2, with the exception of the use of an $LiMn_2O_4$ powder having a mean particle diameter of 1 $\mu$m, which was prepared by heat treating a mixture of lithium carbonate and manganese oxide ($Mn_3O_4$), in place of the $V_6O_{13}$ powder in Comparative Example 2. The composite electrode film of the composite electrode "O" had a thickness of 22 $\mu$m and weighed 19 mg.

Example 11

A composite electrode "P" was obtained in the same manner as in Example 3, with the exception of the use of a $V_2O_5$ powder having a mean particle diameter of 7 $\mu$m, in place of the $V_6O_{13}$ powder in Example 3. The composite electrode film of the composite electrode "P" had a thickness of 23 $\mu$m and weighed 22 mg.

Example 12

Similarly, a composite electrode "Q" was obtained, with the exception of the use of a $V_2O_5$ powder having a mean particle diameter of 7 $\mu$m, in place of the $V_6O_{13}$ powder in Example 4. The composite electrode film of the composite electrode "Q" had a thickness of 23 $\mu$m and weighed 22 mg.

Comparative Example 6

A composite electrode "R" was obtained in the same manner as in Comparative Example 2, with the exception of the use of a $V_2O_5$ powder having a mean particle diameter of 7 $\mu$m, in place of the $V_6O_{13}$ powder in Comparative Example 2. The composite electrode film of the composite electrode "R" had a thickness of 22 $\mu$m and weighed 18 mg.

Subsequently, electrode performance was examined in these composite electrodes.

Batteries "A" to "R" each having a size of 2 $\times$ 2 cm were assembled using the corresponding composite electrode films "A" to "R" obtained in Examples 1 to 12 and Comparative Examples 1 to 6 as positive electrodes, metal lithium sheets having a thickness of 0.3 mm as negative electrodes, and gel polymer electrolytes having a thickness of 0.5 mm as separators. The gel polymer electrolyte used here is one which was prepared by gelling 4.5 g of a KF copolymer KF #2300 used in Example 1 in a propylene carbonate-ethylene carbonate mixture in a molar ratio of 1 : 2 containing 1 M $LiBF_4$ dissolved therein.

FIG. 1 shows the structure of the above-mentioned battery element. A composite electrode film 2 formed over a conductive substrate 1 of silver plated copper film or titanium film functions as the positive electrode, and a negative electrode 4 of metal lithium is disposed thereon with a gel polymer electrolyte 3 interposed therebetween.

The battery element is sealed by 2 metal sheets for sandwiching the battery element and a sealing material for eclectically insulating and sealing the periphery of the metal sheets.

The batteries "A" to "R" were charged and discharged at a constant current of 0.2 mA at 20°C in a voltage range of 4.25 to 2.5 V. The discharge capacity after each charging and discharging cycle was measured, and the electrode performance was evaluated based on the level of reduction in discharge capacity with the progress of charge and discharge cycles. The results are shown in Table 1. Test cells showing less reductions in discharge capacity with the progress of charge and discharge cycles have better charge discharge cycle life performance.

Table 1

| Battery | Discharge capacity (mAh) | | | | | |
|---|---|---|---|---|---|---|
| | Charge and discharge cycles | | | | | |
| | 1 | 10 | 50 | 100 | 150 | 200 |
| A | 1.53 | 1.63 | 1.63 | 1.62 | 1.60 | 1.58 |
| B | 1.50 | 1.62 | 1.62 | 1.60 | 1.55 | 1.45 |
| C | 1.10 | 1.25 | 1.05 | 0.85 | 0.75 | 0.60 |
| D | 3.62 | 4.08 | 4.05 | 3.86 | 3.63 | 3.58 |
| E | 3.40 | 3.96 | 3.78 | 3.55 | 3.27 | 3.20 |
| F | 2.05 | 2.22 | 1.95 | 1.62 | 1.41 | 1.28 |
| G | 3.20 | 3.15 | 3.15 | 3.12 | 3.12 | 3.10 |
| H | 3.18 | 3.14 | 3.14 | 3.12 | 2.98 | 2.86 |
| I | 2.12 | 1.95 | 1.95 | 1.72 | 1.55 | 1.15 |
| J | 3.41 | 3.38 | 3.38 | 3.25 | 3.21 | 3.18 |
| K | 3.36 | 3.28 | 3.26 | 3.26 | 3.18 | 3.14 |
| L | 2.54 | 2.30 | 2.28 | 2.12 | 2.00 | 1.86 |
| M | 2.32 | 2.42 | 2.31 | 2.30 | 2.30 | 2.26 |
| N | 2.28 | 2.22 | 2.23 | 2.18 | 2.16 | 2.12 |
| O | 1.74 | 1.64 | 1.62 | 1.45 | 1.32 | 1.21 |
| P | 2.96 | 2.82 | 2.80 | 2.78 | 2.78 | 2.71 |
| Q | 2.87 | 2.79 | 2.75 | 2.75 | 2.69 | 2.64 |
| R | 1.83 | 1.71 | 1.71 | 1.58 | 1.44 | 1.28 |

As apparent from the results, in the batteries having the corresponding composite electrodes of the examples in accordance with the present invention, the reduction in discharge capacity with the progress of charge and discharge cycles is less than that of the batteries having the corresponding composite electrodes of Comparative Examples. Furthermore, addition of polyvinylidene fluoride helps to increase the amount of NMP, which does not play any role in electrode reaction, escaping from the composite electrode films in fabricating them. This yields an additional secondary effect such that the capacity per weight of composite electrode film can be increased.

The batteries "A" to "R" were further subjected to 10 cycles of charge and discharge at a constant current of 0.2 mA at 20°C in a voltage range of 4.25 to 2.5 V, followed by charging at 0.25 mA until the voltage reaches 4.25 V. The batteries were then stood still for 2 hours in open circuit state. Subsequently, the batteries were charged and discharged at ascending current levels from 0.5, 1.0, 2.0, 5.0, to 10.0 mA; charging and discharging at each current was performed for 20 seconds, respectively. Upon discharging for 20 seconds at each current, the discharge voltage was measured. Electrode performance in each battery was evaluated based on the degree in reduction in discharge voltage. The results are shown in Table 2. Test cells showing less reductions in discharge voltage with the progress of charge and discharge cycles have larger output current values.

Table 2

| Battery | Discharge voltage (V) | | | | | |
|---|---|---|---|---|---|---|
| | Current value (mA) | | | | | |
| | 0.0 | 0.5 | 1.0 | 2.0 | 5.0 | 10.0 |
| A | 4.15 | 4.12 | 4.07 | 3.95 | 3.78 | 3.48 |
| B | 4.15 | 4.10 | 4.02 | 3.87 | 3.62 | 3.12 |
| C | 4.10 | 3.96 | 3.80 | 3.56 | 3.12 | 2.53 |
| D | 4.06 | 4.02 | 3.95 | 3.81 | 3.60 | 3.28 |
| E | 4.05 | 4.00 | 3.90 | 3.70 | 3.42 | 3.10 |
| F | 4.03 | 3.85 | 3.64 | 3.39 | 3.01 | 2.42 |
| G | 4.07 | 4.02 | 3.96 | 3.80 | 3.56 | 3.30 |
| H | 4.06 | 4.00 | 3.89 | 3.61 | 3.22 | 2.94 |
| I | 4.07 | 3.95 | 3.83 | 3.42 | 3.04 | 2.38 |
| J | 4.06 | 4.02 | 3.96 | 3.79 | 3.57 | 3.31 |
| K | 4.06 | 3.98 | 3.89 | 3.60 | 3.20 | 2.95 |
| L | 4.06 | 3.94 | 3.82 | 3.42 | 3.00 | 2.32 |
| M | 4.20 | 4.18 | 4.15 | 4.06 | 3.87 | 3.72 |
| N | 4.20 | 4.16 | 4.12 | 4.01 | 3.82 | 3.64 |
| O | 4.20 | 4.12 | 4.01 | 3.86 | 3.58 | 3.26 |
| P | 4.02 | 3.96 | 3.87 | 3.69 | 3.42 | 3.26 |
| Q | 4.00 | 3.92 | 3.80 | 3.58 | 3.39 | 3.10 |
| R | 4.00 | 3.90 | 3.75 | 3.52 | 3.30 | 3.02 |

As clearly understood from the results, the batteries having the corresponding composite electrodes of the examples in accordance with the present invention are less in reduction in discharge voltage with the increase in current level and have larger output current values, compared with those of the batteries having the corresponding composite electrodes of Comparative Examples. Particularly, the batteries, in which the copolymer of vinylidene difluoride and propylene hexafluoride was used as the polyvinylidene fluoride, can give much larger output current, compared with the batteries having the vinylidene difluoride homopolymer.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

**Claims**

1. A composite electrode comprising:

   an organic disulfide compound which contains at least one sulfur-sulfur bond, wherein said sulfur-sulfur bond is cleaved when electrically reduced to form a sulfur-metal ion bond and said sulfur-metal ion bond is regenerated into said sulfur-sulfur bond when electrically oxidized, said metal ion including proton,
   polyaniline, and
   polyvinylidene fluoride.

2. The composite electrode in accordance with claim 1, further comprising a metal oxide.

3. The composite electrode in accordance with claim 1, wherein said polyvinylidene fluoride is a copolymer of vinylidene difluoride and propylene hexafluoride.

4. The composite electrode in accordance with claim 2, wherein said metal oxide is a transition metal oxide selected from the group consisting of $LiCoO_2$, $V_6O_{13}$, $LiMn_2O_4$, $V_2O_5$ and $LiNiO_2$.

5. A composite electrode comprising a conductive substrate and a composite film formed on said conductive substrate, said composite film comprising:

   an organic disulfide compound which contains at least one sulfur-sulfur bond, wherein said sulfur-sulfur bond is cleaved when electrically reduced to form a sulfur-metal ion bond and said sulfur-metal ion bond is regenerated into said sulfur-sulfur bond when electrically oxidized, said metal ion including proton,
   polyaniline, and
   polyvinylidene fluoride.

6. The composite electrode in accordance with claim 5, wherein said composite film further comprising a metal oxide.

7. The composite electrode in accordance with claim 5, wherein said polyvinylidene fluoride is a copolymer of vinylidene difluoride and propylene hexafluoride.

8. The composite electrode in accordance with claim 6, wherein said metal oxide is a transition metal oxide selected from the group consisting of $LiCoO_2$, $V_6O_{13}$, $LiMn_2O_4$, $V_2O_5$ and $LiNiO_2$.

9. The composite electrode in accordance with claim 5, wherein said conductive substrate is silver plated copper sheet or titanium sheet.

10. A method for producing a composite electrode comprising the steps of:

    dissolving an organic disulfide compound which contains at least one sulfur-sulfur bond, and polyvinylidene fluoride in N-R-2-pyrrolidone, where R represents hydrogen atom or an alkyl group, said sulfur-sulfur bond being cleaved when electrically reduced to form a sulfur-metal ion bond and said sulfur-metal ion bond being regenerated into said sulfur-sulfur bond when electrically oxidized, said metal ion including proton,
    dissolving polyaniline in the resultant solution to prepare a solution "A", and
    applying said solution "A" onto a conductive substrate, followed by heating it in a vacuum or in an inert gas atmosphere.

11. A method for producing a composite electrode comprising the steps of:

    dissolving an organic disulfide compound which contains at least one sulfur-sulfur bond in N-R-2-pyrrolidone, where R represents hydrogen atom or an alkyl group, said sulfur-sulfur bond being cleaved when electrically reduced to form a sulfur-metal ion bond and said sulfur-metal ion bond being regenerated into said sulfur-sulfur bond when electrically oxidized, said metal ion including proton,
    dissolving polyaniline in the resultant solution to prepare a solution "B",
    dispersing a metal oxide powder in a solution of polyvinylidene fluoride in N-R-2-pyrrolidone to prepare a dispersed mixture "C",
    mixing said solution "B" with said dispersed mixture "C" to prepare another dispersed mixture "D", and
    applying said dispersed mixture "D" onto a conductive substrate, followed by heating it in a vacuum or in an inert gas atmosphere.

12. A lithium battery comprising a negative electrode capable of absorbing and desorbing lithium ions reversibly, a nonaqueous electrolyte containing lithium ions, and the composite electrode in accordance with claim 1.

13. A lithium battery comprising a negative electrode capable of absorbing and desorbing lithium ions reversibly, a nonaqueous electrolyte containing lithium ions, and the composite electrode in accordance with claim 2.

FIG. 1